# EUROPEAN PATENT SPECIFICATION

(11) **EP 3 257 692 B1**
(45) Date of publication and mention of the grant of the patent: **15.01.2020**
(21) Application number: 16175075.7
(22) Date of filing: 17.06.2016
(51) Int. Cl.: B60J 1/20, B60J 7/00

(54) **ROLLO ASSEMBLY**
ROLLOANORDNUNG
ENSEMBLE FORMANT ROULEAU

(43) Date of publication of application: 20.12.2017
(73) Proprietor: Inalfa Roof Systems Group B.V., 5807 GW Venray (NL)
(72) Inventor: VAN BOXTEL, Eduardus Christianus Henricus, 5375 AC Reek (NL); CUSTERS, Jur Johannes Maria, 5973 KC Lottum (NL); HAUMANN, Gerardus Franciscus Jacobus, 5804 XV Venray (NL)
(74) Representative: De Vries & Metman

(56) References cited:
- WO-A1-2007/128288
- DE-A1- 19 640 846
- GB-A- 2 481 448

## Description

The invention relates to a rollo assembly in accordance with the preamble of claim 1. Such a rollo assembly is known from WO2007/128288 A1.

In a known rollo assembly the locking arrangement comprises a locking pin (also sometimes referred to as "grenade pin") which in the locked position (in which the torsion spring is preloaded) extends through aligned holes in the hollow winding tube and the fixator. Such a locking pin will be inserted through the holes when the hollow winding tube has been rotated sufficiently relative to the fixator for in a desired amount preloading the torsion spring. In this locked (and preloaded position) the fixator can be mounted in the stationary mounting member (which for example may be part of a housing of the rollo assembly). Then the locking pin is removed (the removal position thus defining the release position thereof) and as a result a rotation of the hollow winding tube relative to the fixator is possible (depending on an appropriate manipulation of the rollo screen) under the preload of the torsion spring.

It is a disadvantage of such a rollo assembly that the mounting process thereof (which occurs after the assembly has been preloaded as explained above) requires two successive steps: firstly mounting the fixator in the stationary mounting member and secondly removing the locking pin. Moreover, the locking pin requires additional space, which is disadvantageous in open roof constructions for vehicles.

WO2007/128288 A1 already shows the additional feature that the hollow winding tube is provided with at least one substantially axially extending inner locking channel and wherein the fixator for each locking channel is provided with a locking projection intended for cooperation with said locking channel, which locking projection through a cooperation between the fixator and a stationary part is axially movable between a locked position occurring when the fixator is not yet mounted in the stationary mounting member and in which the locking projection is housed in the locking channel, and a release position occurring when the fixator is mounted in the stationary mounting member and in which the locking projection is moved out of the locking channel, wherein the locking projection is directly attached to the fixator which is capable of an axial movement relative to the hollow winding tube.

During the mounting process of the fixator in the stationary mounting member a cooperation between the fixator and said stationary part (which may be a stationary part of the rollo assembly but also another stationary part of the open roof construction for a vehicle in which the rollo assembly is to be used) automatically will result in a displacement of the locking projection from a locked position within the locking channel (preventing a relative rotation between the hollow winding tube and the fixator) to a release position out of the locking channel (allowing a relative rotation between the hollow winding tube and the fixator). Thus, during such a mounting process the above mentioned two consecutive steps are combined into a single step, which allows to carry out the mounting process quicker and easier. Further, because a locking pin projecting from the hollow winding tube (for being engageable) is missing, the dimensions of the rollo assembly and the space required therefor are reduced.

This also makes the design less complicated and thus very reliable.

It is an object of the present invention to provide an improved rollo assembly of the above mentioned type.

Thus, in accordance with the present invention a rollo assembly is provided which is characterized as set forth in claim 1.

The stationary part with which the fixator will cooperate for causing its axial movement, is defined by the stationary mounting member.

Such a limited rotation of the fixator, for example, may be used to position the fixator in a locked position with respect to the stationary mounting member (for example like a bayonet mount). The rotation may occur automatically in response to the preload of the torsion spring after the locking projection has reached the release position.

It is noted that the wording "cause" with respect to causing a limited rotation of the fixator also encompasses the possibility that said respective parts just allow such a rotation which however is activated by other means (for example by the torsion spring).

In the mounting position of the fixator (the position during the process of mounting) the mounting wings fit in and can slide along the first channel part. After reaching the second channel part the fixator with mounting wings can rotate (for example caused by the preload of the torsion spring) to the mounted position (the position after completing the process of mounting) in the wider second channel part (which in part may have a circular shape). Substantially such a cooperation between the fixator with mounting wings and the second channel part of the stationary mounting member occurs like with a bayonet mount.

As an alternative it is also possible that the fixator and the stationary part (for example stationary mounting member) have cooperating snap members for maintaining the fixator in its mounted position.

It is conceivable that the axial movement of the fixator from the locked position of the locking projection towards the release position of the locking projection occurs in a direction inwardly relative to the hollow winding tube (which makes the design simple but which increases the passes the possibility that said respective parts just allow such a rotation which however is activated by other means (for example by the torsion spring).

In a further embodiment of the rollo assembly said respective parts comprise a first channel part in the stationary mounting member having a first transverse width and a second channel part connecting to said first channel part and defining an undercut portion with larger transverse width, and wherein said respective parts further comprise mounting wings on the fixator which, in a first rotational mounting position of the fixator define a transverse width in correspondence with the first transverse width of the first channel part and which in a second rotational mounted position of the fixator may be received in the undercut portion of the second channel part.

In the mounting position of the fixator (the position during the process of mounting) the mounting wings fit in and can slide along the first channel part. After reaching the second channel part the fixator with mounting wings can rotate (for example caused by the preload of the torsion spring) to the mounted position (the position after completing the process of mounting) in the wider second channel part (which in part may have a circular shape). Substantially such a cooperation between the fixator with mounting wings and the second channel part of the stationary mounting member occurs like with a bayonet mount.

As an alternative it is also possible that the fixator and the stationary part (for example stationary mounting member) have cooperating snap members for maintaining the fixator in its mounted position.

It is conceivable that the axial movement of the fixator from the locked position of the locking projection towards the release position of the locking projection occurs in a direction inwardly relative to the hollow winding tube (which makes the design simple but which increases the risk of an inadvertent displacement -and thus unlocking- of the fixator during manipulation of the rollo assembly by an operator) or in a direction outwardly relative to the hollow winding tube (reducing the risk of such an inadvertent displacement but possibly leading to a somewhat more complex design).

In one embodiment the fixator is spring-loaded by a spring for an axial movement to a position in which the locking projection assumes its locked position. This ensures that the rollo assembly remains in the locked position until it is mounted.

For example said spring may be defined by the torsion spring, which then is used both for preloading the hollow winding tube relative to the fixator and for keeping the assembly locked until it is mounted. This eliminates the need for an additional spring.

In another type of embodiment of the rollo assembly the fixator has a first part with a fixed axial position relative to the hollow winding tube and a second part defining a locking pin which carries the locking projection and which is capable of an axial movement relative to the first part of the fixator and thus relative to the hollow winding tube.

In such an embodiment the fixator comprises two parts of which the first part does not move axially (but only is capable of rotating relative to the hollow winding tube once the locking projection has assumed its release position) and of which the second part (the locking pin) will carry out the axial movement for moving the locking projection between its locked and release positions.

Also in such an embodiment it is conceivable that the axial movement of the locking pin is caused by a cooperation between respective parts of the locking pin and of the stationary mounting member (or a stationary part).

In one embodiment the locking pin is spring-loaded by a spring for an axial movement to a position in which the locking projection assumes its locked position. This ensures that the rollo assembly remains in the locked position until it is mounted.

Preferably said spring acts between the locking pin and the first part of the fixator.

In addition to, or as an alternative to the use of such a spring it also is conceivable that the locking channel extends with an inclination relative to the axial direction of the hollow winding tube and defines a closed end and an opposite open end and wherein the sense of the inclination is such that the preload of the torsion spring in combination with said inclination urges the locking projection of the locking pin towards said closed end of the locking channel. In such an embodiment the rotation caused by the torsion spring also is used for assuring that the rollo assembly remains in the locked position until it is mounted.

In such an embodiment it further is conceivable that the open end of the locking channel debouches into an endless circumferential channel for receiving and guiding the locking projection when latter is in its release position.

Also in these embodiments the axial movement of the locking pin from the locked position of the locking projection towards the release position of the locking projection may occur in a direction inwardly relative to the first part of the fixator or in a direction outwardly relative to the first part of the fixator.

Further, in these embodiments, the first part of the fixator and the stationary mounting member may comprise the respective parts (mounting wings and first and second channel parts, respectively) as described previously.

It is conceivable that the hollow winding tube comprises two substantially diametrically positioned locking channels, resulting in symmetrical loads.

Finally an embodiment is mentioned in which between the fixator and the hollow winding tube a bearing assembly is provided having a (first) bearing part fixedly attached to the hollow winding tube (and generally too another, second, bearing part attached to the fixator) and wherein the at least one locking channel is provided in said (first) bearing part. It is noted that said bearing part(s) also may be an integral part of the hollow winding tube (fixator).

Hereinafter the invention will be elucidated while referring to the drawings, in which:
Figure 1 is a schematic longitudinal cross sectional view of one end of a state of the art rollo assembly;
Figure 2 is a corresponding schematic longitudinal cross sectional view of an embodiment of the rollo assembly not being part of the present invention;
Figure 3 illustrates one possible mounting process of the rollo assembly of figure 2;
Figure 4 schematically illustrates two parts of an embodiment according to the present invention for another mounting process;
Figure 5 is a corresponding schematic longitudinal cross sectional view of an alternative embodiment of the rollo assembly, and
Figure 6 shows another embodiment according to the invention in a view similar to VI in figure 5.

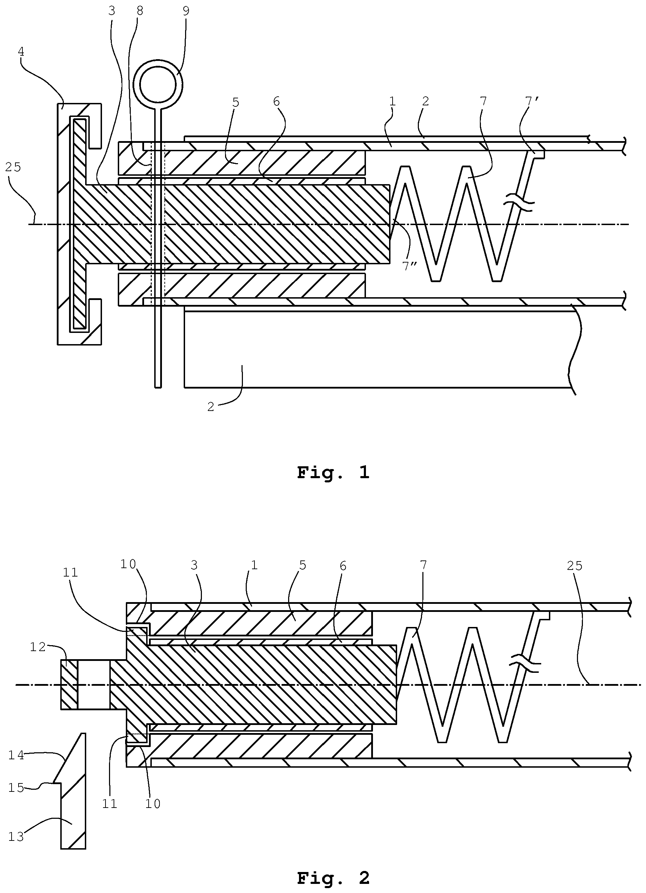

The state of the art rollo assembly illustrated in figure 1 comprises a hollow winding tube 1 for winding or unwinding a rollo screen 2. Concentrically (around a central axis defining an axial direction 25) within the winding tube 1 a fixator 3 is mounted for a rotation relative to the hollow winding tube 1. The fixator 3 projects from one end of the winding tube 1 and is intended to be mounted (in a non-rotatable stationary manner) in a stationary mounting member 4 which, for example, may be part of a housing for surrounding the winding tube 1. The mounting member 4 may define a bayonet mount.

Between the hollow winding tube 1 and the fixator 3 a bearing may be provided comprising two bearing parts 5,6 attached to the winding tube 1 and fixator 3, respectively. These bearing parts 5,6 also may be integral parts of the winding tube 1 and fixator, respectively.

A torsion spring 7 is positioned within the hollow winding tube 1 having a first end 7' attached to the hollow winding tube 1 and a second end 7" attached to the fixator 3. As is generally known for this type of rollo assemblies the torsion spring 7 is intended for preloading the hollow winding tube 1 such that it tries to rotate relative to the fixator 3 in a direction for winding the rollo screen 2 on the hollow winding tube.

This rollo assembly further comprises a locking arrangement which is movable between a locked position in which the hollow winding tube 1 cannot rotate relative to the fixator 3 (in which position the winding tube 1 with fixator 3, which previously have been rotated relative to each other for causing the preload of the torsion spring 7, may be mounted in the mounting member 4) and a release position in which a relative rotation between the fixator 3 and hollow winding tube 1 is possible. In this state of the art rollo assembly this locking arrangement is defined by a series of holes 8 through the hollow winding tube 1, bearing parts 5 and 6 and fixator 3 (indicated by a dashed line) and a locking pin (or grenade pin) 9 which, when the holes 8 are aligned, can extend through these holes, thus locking the rollo assembly (specifically in the above mentioned preloaded position). When the mounting process in the mounting member 4 has been completed, the locking pin 9 is removed from the holes 8, thus allowing the winding tube 1 to rotate under the preload of the torsion spring 7 around the stationary fixator 3 (as far as allowed by an appropriate movement of the rollo screen 2).

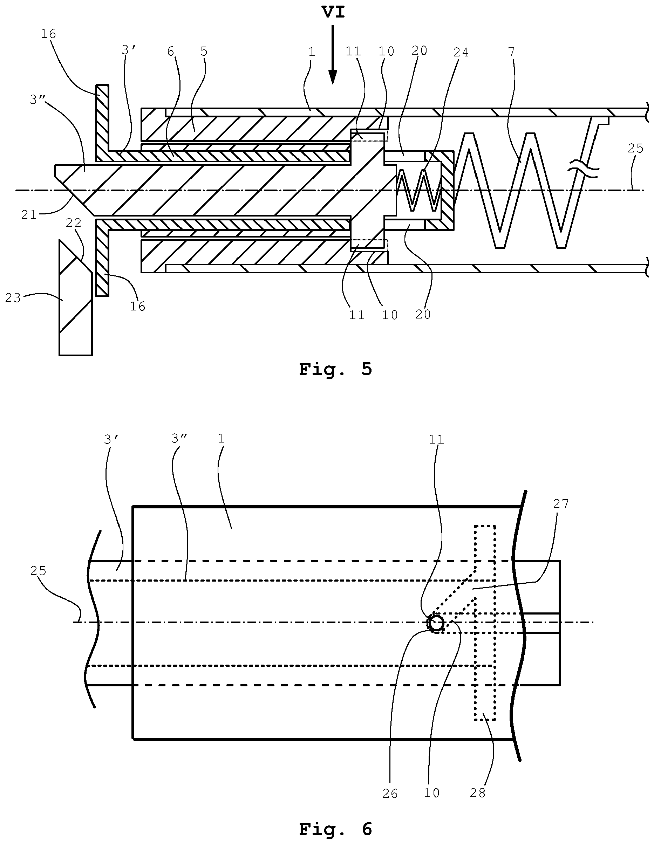

Referring to figure 2, next an embodiment of a rollo assembly not being part of the present invention is described. Like parts have like reference numbers as in figure 1. The rollo screen 2 has not been shown (as applies too for the figures 5 and 6).

The hollow winding tube 1, or more specifically the bearing part 5 connected thereto, is provided with two (in this embodiment substantially diametrically positioned) substantially axially extending inner locking channels 10 which open to the (left) outer end of the winding tube 1. The fixator 3 likewise is provided with two locking projections 11 directly attached thereto and intended for cooperation with said locking channels 10. The fixator 3 is capable of an axial movement relative to the winding tube 1 (the bearing assembly 5,6 being devised for allowing such an axial movement).

The torsion spring 7 in this embodiment preloads the fixator 3 in the axial direction 25 such that the locking projections 11 are kept in the locking channels 10 while abutting an inner end thereof (as illustrated in figure 2). As will appear below, the fixator 3 and thus its locking projections 11, through a cooperation between the fixator 3 and a stationary part, is axially movable between a locked position (figure 2) occurring when the fixator 3 is not yet mounted in a stationary mounting member 4 (as illustrated in figure 1, for example) and in which the locking projections 11 are housed in the locking channels 10, and a release position occurring when the fixator 3 is mounted in such a stationary mounting member and in which the locking projections 11 are moved (to the left) out of the locking channels 10.

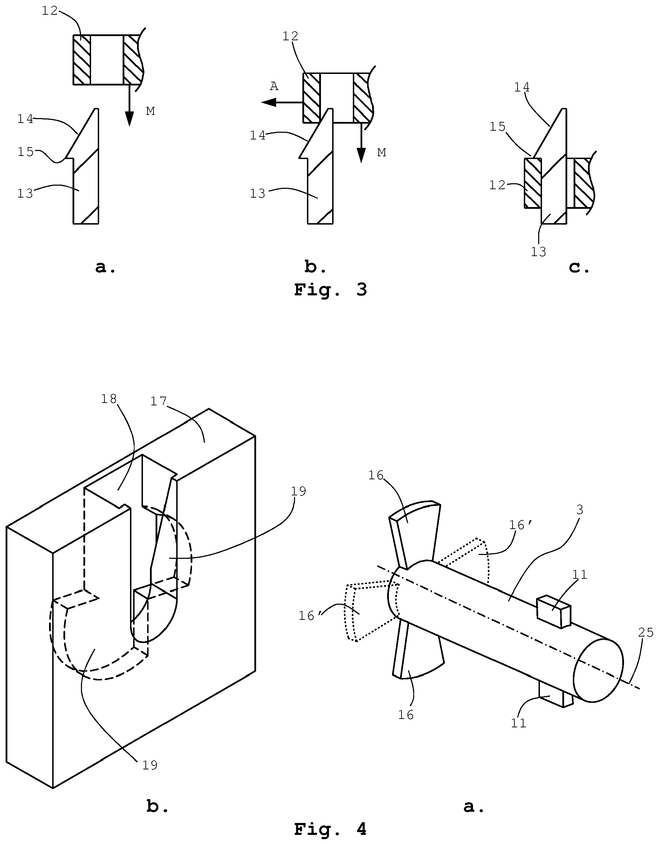

In figure 2 the outer end of the fixator 3 is provided with a catch 12 that can cooperate with a stationary hook 13 in a manner as illustrated in figure 3. When the rollo is being mounted (in a direction according to arrow M in figure 3a and 3b), the catch 12 will slide along an inclined face 14 of the hook 13, which also results in an axial movement (according to arrow A in figure 3b) of the fixator 3 to the left. When the catch 12 is positioned behind a snapping corner 15 of the hook 13 the mounting process is finished and the fixator has moved sufficiently to move its locking projections 11 out of the locking channels 10. The torsion spring 7 now may rotate the hollow winding tube 1 relative to the fixator 3 (if allowed by the rollo screen 2) .

As described above, the axial movement of the fixator 3 is caused by a cooperation between respective parts of the fixator 3 (here catch 12) and of a stationary part (here hook 13). It is also possible that a stationary mounting member 4 as illustrated in figure 1 (or another part) plays the role of such a stationary part.

Further it is noted that in the embodiment illustrated in figures 2 and 3 said respective parts 12 and 13 only cause an axial movement of the fixator 3. As an alternative said respective parts, however, may be devised in such a manner that they also may cause (or allow) a limited rotation of the fixator 3. As such, in figure 4a, for showing an embodiment in accordance with the invention, an alternative design of the outer end of the fixator 3 is illustrated schematically and in a perspective view. On its outer end the fixator 3 carries mounting wings 16. A stationary mounting member 17 for cooperation with such an alternative fixator 3 is illustrated schematically and in a perspective view in figure 4b. It comprises a first channel part 18 having a first transverse width and a second undercut channel part (in this embodiment having two partly circular channel parts 19) connecting to said first channel part 18 and defining an undercut channel portion with larger transverse width.

The mounting wings 16 on the fixator 3 in a first rotational mounting position of the fixator 3 (illustrated in full lines in figure 4a) define a transverse width in correspondence with the first transverse width of (an undercut part of) the first channel part 18 and in said position can be slid down in said first channel part 18 during the mounting process of the rollo assembly. The first channel part 18 extends inclined in such a manner that the fixator 3 also will move in the axial direction 25 while sliding along the first channel part 18. When arrived in the second channel part 19 the fixator 3 (under influence of the torsion spring 7) with its mounting wings 16 can rotate to a position of the mounting wings indicated as 16' in figure 4a. Now the fixator is in a final mounted position (in correspondence with a bayonet mount).

In the above described embodiments the axial movement of the fixator 3 from the locked position of the locking projections 11 towards the release position of the locking projections occurs in a direction outwardly relative to the hollow winding tube 1. However it also is conceivable that such a movement occurs inwardly relative to the hollow winding tube 1. A corresponding amendment of relevant parts of the rollo assembly will be clear to a person skilled in the art (for example an opposite inclination of inclined face 14 or an opposite inclination of the first channel part 18) .

Although in this embodiment the torsion spring 7 is used for urging the fixator 3 inwards, also a separate spring (not illustrated) could be used for that purpose. Further the hook 13, when provided, also may be integrated into a stationary mounting member 4.

Now referring to figure 5 a different embodiment of the rollo assembly not being part of the invention is illustrated. In this embodiment the fixator has a first part 3' with a fixed axial position relative to the hollow winding tube 1 and a second part defining a locking pin 3" which carries two locking projections 11 which extend through longitudinal slots 20 in the first fixator part 3' and into locking channels 10 of the bearing part 5 (or of the hollow winding tube 1). When the locking projections 11 are positioned in the locking channels 10 the winding tube 1 cannot rotate relative to the locking pin 3" and, because the locking projections 11 also extend through the slots 20 of the first fixator part 3", also cannot rotate relative to the first fixator part 3'.

The locking pin 3" is capable of an axial movement relative to the first part 3' of the fixator and thus relative to the hollow winding tube 1. This axial movement of the locking pin 3" is caused by a cooperation between an inclined face 21 of the locking pin 3" and an inclined face 22 of a stationary part 23 (or a mounting member) during the mounting process of the rollo assembly, as a result of which the locking projections 11 move axially to the right (inwards) out of the locking channels 10 to a release position in which the winding tube 1 can rotate with respect to the locking pin 3" and as a result with respect to the first fixator part 3'.

The locking pin 3" is spring-loaded by a spring 24 for an axial movement to the position (in figure 5 to the left) in which the locking projections 11 assume their locked position in the corresponding locking channels 10.

In the illustrated embodiment said spring 24 acts between the locking pin 3" and the first fixator part 3".

Also in this embodiment the movement between a locked position and a release position may be opposite (outwards) to what is shown in figure 5. Further it is noted that the first part 3' of the fixator here also is provided with mounting wings 16 which may operate in a manner as described with respect to figure 4.

In the embodiment according to figure 5 the rollo assembly comprises two springs: the torsion spring 7 for preloading the hollow winding tube 1 relative to the fixator 3', 3" and the spring 24 for preloading the locking pin 3" towards its locked position. It is however possible to amend (simplify) the design such that only the torsion spring 7 is needed.

Such an amended embodiment, which is part of the invention, will be clarified while referring to figure 6 which basically is a view of such an alternative embodiment when viewed in a direction according to VI in figure 5.

Only parts which are relevant for explaining the design are shown. In this embodiment the spring 24 is absent and the locking channels 10 extends with an inclination relative to the axial direction 25 of the hollow winding tube 1 and each define a closed end 26 and an opposite open end 27. The sense of the inclination of the locking channels 10 is such that the preload of the torsion spring 7 (trying to rotate the fixator 3',3") in combination with said inclination urges the locking projections 11 of the locking pin 3" towards said closed end 26 of the locking channels 10 (that is, towards the locked position).

It is noted that although these locking channels 10 extend inclined relative to the axial direction 25, they still fall within the definition of locking channels which extend 'substantially' in the axial direction.

As a result of an (inward) axial movement of the locking pin 3" the locking projections 11 will slide along the inclined locking channels 10 towards the open ends 27 which debouch into an endless circumferential channel 28 for receiving and guiding the locking projections 11 which then are in their release position for allowing a rotation of the hollow winding tube 1 relative to the fixator 3',3".

Also in this embodiment the design may be changed such that the axial movement of the locking pin 3" between the locked position and release position does not occur inwards (to the right in figure 6) but outwards (to the left in figure 6). The changes needed for implementing such a change will be readily conceivable for a person skilled in the art. Further, also in this embodiment the first part 3' of the fixator may be provided with mounting wings 16 which may operate in a manner as described with respect to figure 4.

The invention is not limited to the embodiments described which may be varied widely within the scope of the invention as defined by the appending claims.

## Claims

1. Rollo assembly intended for use in an open roof construction for a vehicle, comprising a hollow winding tube (1) for a rollo screen (2), a fixator (3) mounted for a rotation within the winding tube, which fixator projects from one end of the winding tube and is intended to be mounted in a stationary mounting member (4), a torsion spring (7) positioned within the hollow winding tube having a first end attached to the hollow winding tube and a second end attached to the fixator and intended for preloading the hollow winding tube to rotate relative to the fixator in a direction for winding the rollo screen on the hollow winding tube and a locking arrangement which is movable between a locked position in which the hollow winding tube (1) cannot rotate relative to the fixator (3) and a release position in which a relative rotation between the fixator and hollow winding tube is possible, wherein the hollow winding tube (1) is provided with at least one substantially axially extending inner locking channel (10) and wherein the fixator (3) for each locking channel is provided with a locking projection (11) intended for cooperation with said locking channel, which locking projection (11) through a cooperation between the fixator (3) and a stationary part (4;13;17;23) is axially movable between a locked position occurring when the fixator is not yet mounted in the stationary mounting member and in which the locking projection (11) is housed in the locking channel (10), and a release position occurring when the fixator is mounted in the stationary mounting member and in which the locking projection is moved out of the locking channel, wherein the locking projection (11) is directly attached to the fixator (3) which is capable of an axial movement relative to the hollow winding tube (1), **characterized in that** the axial movement of the fixator (3) as well as a limited rotation of the fixator is caused by a cooperation between respective parts of the fixator (3) and of the stationary mounting member (4;13;17;23) and wherein said respective parts comprise a first channel part (18) in the stationary mounting member (17) having a first transverse width and a second channel part (19) connecting to said first channel part and defining an undercut portion with larger transverse width, and wherein said respective parts further comprise mounting wings (16) on the fixator (3) which, in a first rotational mounting position of the fixator define a transverse width in correspondence with the first transverse width of the first channel part and which in a second rotational mounted position of the fixator may be received in the undercut portion of the second channel part.

2. Rollo assembly according to claim 1, wherein the axial movement of the fixator (3) from the locked position of the locking projection (11) towards the release position of the locking projection occurs in a direction inwardly relative to the hollow winding tube (1) or in a direction outwardly relative to the hollow winding tube.

3. Rollo assembly according to claim 1 or 2, wherein the fixator (3) is spring-loaded by a spring (7) for an axial movement to a position in which the locking projection (11) assumes its locked position.

4. Rollo assembly according to claim 3, wherein said spring is defined by the torsion spring (7).

5. Rollo assembly intended for use in an open roof construction for a vehicle, comprising a hollow winding tube (1) for a rollo screen (2), a fixator (3) mounted for a rotation within the winding tube, which fixator projects from one end of the winding tube and is intended to be mounted in a stationary mounting member (4), a torsion spring (7) positioned within the hollow winding tube having a first end attached to the hollow winding tube and a second end attached to the fixator and intended for preloading the hollow winding tube to rotate relative to the fixator in a direction for winding the rollo screen on the hollow winding tube and a locking arrangement which is movable between a locked position in which the hollow winding tube (1) cannot rotate relative to the fixator (3) and a release position in which a relative rotation between the fixator and hollow winding tube is possible, wherein the hollow winding tube (1) is provided with at least one substantially axially extending inner locking channel (10) and wherein the fixator (3) for each locking channel is provided with a locking projection (11) intended for cooperation with said locking channel, which locking projection (11) through a cooperation between the fixator (3) and a stationary part (4;13;17;23) is axially movable between a locked position occurring when the fixator is not yet mounted in the stationary mounting member and in which the locking projection (11) is housed in the locking channel (10), and a release position occurring when the fixator is mounted in the stationary mounting member and in which the locking projection is moved out of the locking channel, **characterized in that** the fixator has a first part (3') with a fixed axial position relative to the hollow winding tube (1) and a second part defining a locking pin (3") which carries the locking projection (11) and which is capable of an axial movement relative to the first part of the fixator and thus relative to the hollow winding tube (1) and wherein the locking channel (10) extends with an inclination relative to the axial direction (25) of the hollow winding tube (1) and defines a closed end (26) and an opposite open end (27) and wherein the sense of the inclination is such that the preload of the torsion spring (7) in combination with said inclination urges the locking projection (11) of the locking pin (3") towards said closed end (26) of the locking channel (10).

6. Rollo assembly according to claim 5, wherein the axial movement of the locking pin (3") is caused by a cooperation between respective parts (21,22) of the locking pin (3") and of the stationary mounting member (23).

7. Rollo assembly according to claim 5 or 6, wherein the locking pin (3") is spring-loaded by a spring (24) for an axial movement to a position in which the locking projection (11) assumes its locked position.

8. Rollo assembly according to claim 7, wherein said spring (24) acts between the locking pin (3") and the first part (3') of the fixator.

9. Rollo assembly according to any of the claims 5-8, wherein the open end (27) of the locking channel (10) debouches into an endless circumferential channel (28) for receiving and guiding the locking projection (11) when latter is in its release position.

10. Rollo assembly according to any of the claims 5-9, wherein the axial movement of the locking pin (3") from the locked position of the locking projection towards the release position of the locking projection occurs in a direction inwardly relative to the first part (3') of the fixator or in a direction outwardly relative to the first part of the fixator.

11. Rollo assembly according to any of the claims 5-10, wherein the first part (3') of the fixator and the stationary mounting member (4;13;17;23) comprise the respective parts as defined in claim 1.

12. Rollo assembly according to any of the previous claims, wherein the hollow winding tube (1) comprises two substantially diametrically positioned locking channels (10) .

13. Rollo assembly according to any of the previous claims, wherein between the fixator (3) and the hollow winding tube (1) a bearing assembly (5,6) is provided having a bearing part (5) fixedly attached to the hollow winding tube (1) and wherein the at least one locking channel (10) is provided in said bearing part (5).

## Patentansprüche

1. Rolloanordnung zur Verwendung in einer Offendachkonstruktion für ein Fahrzeug, mit einem hohlen Wickelrohr (1) für einen Rollo-Screen (2), einer Fixiereinrichtung (3), die für eine Drehbewegung innerhalb des Wickelrohrs montiert ist, wobei die Fixiereinrichtung von einem Ende des Wickelrohrs hervorsteht und dazu vorgesehen ist, in einem stationären Montageelement (4) montiert zu werden, einer Torsionsfeder (7), die innerhalb des hohlen Wickelrohrs angeordnet ist und ein am hohlen Wickelrohr befestigtes erstes Ende und ein an der Fixiereinrichtung befestigtes zweites Ende aufweist und dazu vorgesehen ist, das hohle Wickelrohr für eine Drehbewegung relativ zur Fixiereinrichtung in einer Richtung zum Aufwickeln des Rollo-Screens auf das hohle Wickelrohr vorzuspannen, und einer Verriegelungsanordnung, die bewegbar ist zwischen einer verriegelten Position, in der sich das hohle Wickelrohr (1) nicht relativ zur Fixiereinrichtung (3) drehen kann, und einer Freigabeposition, in der eine relative Drehbewegung zwischen der Fixiereinrichtung und dem hohlen Wickelrohr möglich ist, wobei das hohle Wickelrohr (1) mindestens einen im Wesentlichen axial verlaufenden inneren Verriegelungskanal (10) aufweist, und wobei die Fixiereinrichtung (3) für jeden Verriegelungskanal einen Verriegelungsvorsprung (11) aufweist, der dazu vorgesehen ist, mit dem Verriegelungskanal zusammenzuwirken, wobei der Verriegelungsvorsprung (11) durch ein Zusammenwirken zwischen der Fixiereinrichtung (3) und einem stationären Teil (4; 13; 17; 23) axial bewegbar ist zwischen einer verriegelten Position, die auftritt, wenn die Fixiereinrichtung noch nicht im stationären Montageelement montiert ist und in der der Verriegelungsvorsprung (11) im Verriegelungskanal (10) aufgenommen ist, und einer Freigabeposition, die auftritt, wenn die Fixiereinrichtung im stationären Montageelement montiert ist und in der der Verriegelungsvorsprung aus dem Verriegelungskanal herausbewegt ist, wobei der Verriegelungsvorsprung (11) direkt an der Fixiereinrichtung (3) befestigt ist, die dazu geeignet ist, eine axiale Bewegung bezüglich des hohlen Wickelrohrs (1) auszuführen,
**dadurch gekennzeichnet, dass**
die axiale Bewegung der Fixiereinrichtung (3) sowie eine begrenzte Drehbewegung der Fixiereinrichtung durch ein Zusammenwirken zwischen den jeweiligen Teilen der Fixiereinrichtung (3) und des stationären Montageelements (4; 13; 17; 23) verursacht wird, und wobei die jeweiligen Teile einen ersten Kanalteil (18) im stationären Montageelement (17), der eine erste Breite in Querrichtung aufweist, und einen zweiten Kanalteil (19) aufweisen, der mit dem ersten Kanalteil verbunden ist und einen hinterschnittenen Abschnitt mit einer größeren Breite in Querrichtung definiert, und wobei die jeweiligen Teile ferner Montageflügel (16) an der Fixiereinrichtung (3) aufweisen, die in einer ersten Drehmontageposition der Fixiereinrichtung eine Breite in Querrichtung definieren, die der ersten Breite in Querrichtung des ersten Kanalteils entspricht, und die in einer zweiten Drehmontageposition der Fixiereinrichtung in dem hinterschnittenen Abschnitt des zweiten Kanalteils aufgenommen werden können.

2. Rolloanordnung nach Anspruch 1, wobei die axiale Bewegung der Fixiereinrichtung (3) von der verriegelten Position des Verriegelungsvorsprungs (11) in Richtung zur Freigabeposition des Verriegelungsvorsprungs in eine Richtung relativ zum hohlen Wickelrohr (1) nach innen oder in eine Richtung relativ zum hohlen Wickelrohr nach außen erfolgt.

3. Rolloanordnung nach Anspruch 1 oder 2, wobei die Fixiereinrichtung (3) durch eine Feder (7) für eine axiale Bewegung in eine Position vorgespannt ist, in der der Verriegelungsvorsprung (11) seine verriegelte Position einnimmt.

4. Rolloanordnung nach Anspruch 3, wobei die Feder durch die Torsionsfeder (7) definiert ist.

5. Rolloanordnung zur Verwendung in einer Offendachkonstruktion für ein Fahrzeug mit einem hohlen Wickelrohr (1) für einen Rollo-Screen (2), einer Fixiereinrichtung (3), die für eine Drehbewegung innerhalb des Wickelrohrs montiert ist, wobei die Fixiereinrichtung von einem Ende des Wickelrohrs hervorsteht und dafür vorgesehen ist, in einem stationären Befestigungselement (4) montiert zu werden, einer Torsionsfeder (7), die innerhalb des hohlen Wickelrohrs angeordnet ist und ein am hohlen Wickelrohr befestigtes erstes Ende und ein an der Fixiereinrichtung befestigtes zweites Ende aufweist und dafür vorgesehen ist, das hohle Wickelrohr vorzuspannen, so dass es sich relativ zur Fixiereinrichtung in eine Richtung zum Aufwickeln des Rollo-Screens auf das hohle Wickelrohr dreht, und einer Verriegelungsanordnung, die bewegbar ist zwischen einer verriegelten Position, in der sich das hohle Wickelrohr (1) nicht relativ zur Fixiereinrichtung (3) drehen kann, und einer Freigabeposition, in der eine relative Drehbewegung zwischen der Fixiereinrichtung und dem hohlen Wickelrohr möglich ist, wobei das hohle Wickelrohr (1) mindestens einen im Wesentlichen axial verlaufenden inneren Verriegelungskanal (10) aufweist, und wobei die Fixiereinrichtung (3) für jeden Verriegelungskanal einen Verriegelungsvorsprung (11) aufweist, der dazu vorgesehen ist, mit dem Verriegelungskanal zusammenzuwirken, wobei der Verriegelungsvorsprung (11) durch ein Zusammenwirken zwischen der Fixiereinrichtung (3) und einem stationären Teil (4; 13; 17; 23) axial bewegbar ist zwischen einer verriegelten Position, die auftritt, wenn die Fixiereinrichtung noch nicht im stationären Montageelement montiert ist und in der der Verriegelungsvorsprung (11) im Verriegelungskanal (10) aufgenommen ist, und einer Freigabeposition, die auftritt, wenn die Fixiereinrichtung im stationären Montageelement montiert ist und in der der Verriegelungsvorsprung aus dem Verriegelungskanal herausbewegt ist,
**dadurch gekennzeichnet, dass**
die Fixiereinrichtung einen ersten Teil (3') mit einer festen axialen Position in Bezug auf das hohle Wickelrohr (1) und einen zweiten Teil aufweist, der einen Verriegelungsstift (3") definiert, der den Verriegelungsvorsprung (11) trägt und der dazu geeignet ist, eine axiale Bewegung relativ zum ersten Teil der Fixiereinrichtung und damit relativ zum hohlen Wickelrohr (1) auszuführen, und wobei sich der Verriegelungskanal (10) mit einer Neigung relativ zur axialen Richtung (25) des hohlen Wickelrohrs (1) erstreckt und ein geschlossenes Ende (26) und ein gegenüberliegendes offenes Ende (27) definiert, und wobei die Neigungsrichtung derart ist, dass die Vorspannung der Torsionsfeder (7) in Kombination mit der Neigung den Verriegelungsvorsprung (11) des Verriegelungsstiftes (3") in Richtung zum geschlossenen Ende (26) des Verriegelungskanals (10) drückt.

6. Rolloanordnung nach Anspruch 5, wobei die axiale Bewegung des Verriegelungsstifts (3") durch ein Zusammenwirken zwischen jeweiligen Teilen (21, 22) des Verriegelungsstiftes (3") und des stationären Befestigungselementes (23) verursacht wird.

7. Rolloanordnung nach Anspruch 5 oder 6, wobei der Verriegelungsstift (3") durch eine Feder (24) für eine axiale Bewegung in eine Position vorgespannt ist, in der der Verriegelungsvorsprung (11) seine verriegelte Position einnimmt.

8. Rolloanordnung nach Anspruch 7, wobei die Feder (24) zwischen dem Verriegelungsstift (3") und dem ersten Teil (3') der Fixieranordnung wirkt.

9. Rolloanordnung nach einem der Ansprüche 5 bis 8, wobei das offene Ende (27) des Verriegelungskanals (10) in einen endlosen Umfangskanal (28) mündet, um den Verriegelungsvorsprung (11) aufzunehmen und zu führen, wenn sich dieser in seiner Freigabeposition befindet.

10. Rolloanordnung nach einem der Ansprüche 5 bis 9, wobei die axiale Bewegung des Verriegelungsstifts (3") von der verriegelten Position des Verriegelungsvorsprungs in Richtung zur Freigabeposition des Verriegelungsvorsprungs in einer Richtung relativ zum ersten Teil (3') der Fixiereinrichtung nach innen oder in einer Richtung relativ zum ersten Teil der Fixiereinrichtung nach außen erfolgt.

11. Rolloanordnung nach einem der Ansprüche 5 bis 10, wobei der erste Teil (3') der Fixiereinrichtung und das stationäre Montageelement (4; 13; 17; 23) die jeweiligen Teile aufweisen, die in Anspruch 1 definiert sind.

12. Rolloanordnung nach einem der vorhergehenden Ansprüche, wobei das hohle Wickelrohr (1) zwei im Wesentlichen diametral angeordnete Verriegelungskanäle (10) aufweist.

13. Rolloanordnung nach einem der vorhergehenden Ansprüche, wobei zwischen der Fixiereinrichtung (3) und dem hohlen Wickelrohr (1) eine Lageranordnung (5, 6) vorgesehen ist, die ein Lagerteil (5) aufweist, das am hohlen Wickelrohr (1) starr befestigt ist, und wobei der mindestens eine Verriegelungskanal (10) im Lagerteil (5) ausgebildet ist.

## Revendications

1. Ensemble rouleau destiné à être utilisé dans une construction de toit ouvrant pour un véhicule, comprenant un tube d'enroulement creux (1) pour un rideau à rouleau (2), un fixateur (3) monté pour une rotation au sein du tube d'enroulement, lequel fixateur fait saillie d'une extrémité du tube d'enroulement et est destiné à être monté dans un organe de montage stationnaire (4), un ressort de torsion (7) positionné au sein du tube d'enroulement creux ayant une première extrémité attachée au tube d'enroulement creux et une seconde extrémité attachée au fixateur et destinée à précharger le tube d'enroulement creux pour tourner par rapport au fixateur dans une direction d'enroulement du rideau à rouleau sur le tube d'enroulement creux et un agencement de verrouillage qui est mobile entre une position verrouillée dans laquelle le tube d'enroulement creux (1) ne peut pas tourner par rapport au fixateur (3) et une position de libération dans laquelle une rotation relative entre le fixateur et le tube d'enroulement creux est possible, dans lequel le tube d'enroulement creux (1) est pourvu d'au moins un canal de verrouillage intérieur s'étendant sensiblement axialement (10) et dans lequel le fixateur (3) pour chaque canal de verrouillage est pourvu d'une saillie de verrouillage (11) destinée à coopérer avec ledit canal de verrouillage, laquelle saillie de verrouillage (11) par une coopération entre le fixateur (3) et une partie stationnaire (4 ; 13 ; 17 ; 23) est mobile axialement entre une position verrouillée se produisant lorsque le fixateur n'est pas encore monté dans l'organe de montage stationnaire et dans laquelle la saillie de verrouillage (11) est logée dans le canal de verrouillage (10), et une position de libération se produisant lorsque le fixateur est monté dans l'organe de montage stationnaire et dans laquelle la saillie de verrouillage est déplacée hors du canal de verrouillage, dans lequel la saillie de verrouillage (11) est attachée directement au fixateur (3) qui est capable de se déplacer axialement par rapport au tube d'enroulement creux (1),
**caractérisé en ce que** le déplacement axial du fixateur (3) ainsi qu'une rotation limitée du fixateur sont provoqués par une coopération entre des parties respectives du fixateur (3) et de l'organe de montage stationnaire (4 ; 13 ; 17 ; 23) et dans lequel lesdites parties respectives comprennent une première partie de canal (18) dans l'organe de montage stationnaire (17) ayant une première largeur transversale et une seconde partie de canal (19) se raccordant à ladite première partie de canal et définissant une portion de dépouille avec une largeur transversale plus grande, et dans lequel lesdites parties respectives comprennent en outre des ailettes de montage (16) sur le fixateur (3) qui, dans une première position de montage rotative du fixateur définissent une largeur transversale en correspondance avec la première largeur transversale de la première partie de canal et qui dans une seconde position montée rotative du fixateur peuvent être reçues dans la portion de dépouille de la seconde partie de canal.

2. Ensemble rouleau selon la revendication 1, dans lequel le déplacement axial du fixateur (3) de la position verrouillée de la saillie de verrouillage (11) vers la position de libération de la saillie de verrouillage se produit dans une direction vers l'intérieur par rapport au tube d'enroulement creux (1) ou dans une direction vers l'extérieur par rapport au tube d'enroulement creux.

3. Ensemble rouleau selon la revendication 1 ou 2, dans lequel le fixateur (3) est chargé par ressort par un ressort (7) pour un déplacement axial vers une position dans laquelle la saillie de verrouillage (11) adopte sa position verrouillée.

4. Ensemble rouleau selon la revendication 3, dans lequel ledit ressort est défini par le ressort de torsion (7).

5. Ensemble rouleau destiné à être utilisé dans une construction de toit ouvrant pour un véhicule, comprenant un tube d'enroulement creux (1) pour un rideau à rouleau (2), un fixateur (3) monté pour une rotation au sein du tube d'enroulement, lequel fixateur fait saillie d'une extrémité du tube d'enroulement et est destiné à être monté dans un organe de montage stationnaire (4), un ressort de torsion (7) positionné au sein du tube d'enroulement creux ayant une première extrémité attachée au tube d'enroulement creux et une seconde extrémité attachée au fixateur et destinée à précharger le tube d'enroulement creux pour tourner par rapport au fixateur dans une direction d'enroulement du rideau à rouleau sur le tube d'enroulement creux et un agencement de verrouillage qui est mobile entre une position verrouillée dans laquelle le tube d'enroulement creux (1) ne peut pas tourner par rapport au fixateur (3) et une position de libération dans laquelle une rotation relative entre le fixateur et le tube d'enroulement creux est possible, dans lequel le tube d'enroulement creux (1) est pourvu d'au moins un canal de verrouillage intérieur s'étendant sensiblement axialement (10) et dans lequel le fixateur (3) pour chaque canal de verrouillage est pourvu d'une saillie de verrouillage (11) destinée à coopérer avec ledit canal de verrouillage, laquelle saillie de verrouillage (11) par une coopération entre le fixateur (3) et une partie stationnaire (4 ; 13 ; 17 ; 23) est mobile axialement entre une position verrouillée se produisant lorsque le fixateur n'est pas encore monté dans l'organe de montage stationnaire et dans laquelle la saillie de verrouillage (11) est logée dans le canal de verrouillage (10), et une position de libération se produisant lorsque le fixateur est monté dans l'organe de montage stationnaire et dans laquelle la saillie de verrouillage est déplacée hors du canal de verrouillage, **caractérisé en ce que** le fixateur comporte une première partie (3') avec une position axiale fixe par rapport au tube d'enroulement creux (1) et une seconde partie définissant une goupille de verrouillage (3") qui porte la saillie de verrouillage (11) et qui est capable de se déplacer axialement par rapport à la première partie du fixateur et ainsi par rapport au tube d'enroulement creux (1) et dans lequel le canal de verrouillage (10) s'étend avec une inclinaison par rapport à la direction axiale (25) du tube d'enroulement creux (1) et définit une extrémité fermée (26) et une extrémité ouverte opposée (27) et dans lequel le sens de l'inclinaison est tel que la précharge du ressort de torsion (7) en combinaison avec ladite inclinaison pousse la saillie de verrouillage (11) de la goupille de verrouillage (3") vers ladite extrémité fermée (26) du canal de verrouillage (10).

6. Ensemble rouleau selon la revendication 5, dans lequel le déplacement axial de la goupille de verrouillage (3") est provoqué par une coopération entre des parties respectives (21, 22) de la goupille de verrouillage (3") et de l'organe de montage stationnaire (23).

7. Ensemble rouleau selon la revendication 5 ou 6, dans lequel la goupille de verrouillage (3") est chargée par ressort par un ressort (24) pour un déplacement axial vers une position dans laquelle la saillie de verrouillage (11) adopte sa position verrouillée.

8. Ensemble rouleau selon la revendication 7, dans lequel ledit ressort (24) agit entre la goupille de verrouillage (3") et la première partie (3') du fixateur.

9. Ensemble rouleau selon l'une quelconque des revendications 5 à 8, dans lequel l'extrémité ouverte (27) du canal de verrouillage (10) débouche dans un canal circonférentiel sans fin (28) pour recevoir et guider la saillie de verrouillage (11) lorsque cette dernière est dans sa position de libération.

10. Ensemble rouleau selon l'une quelconque des revendications 5 à 9, dans lequel le déplacement axial de la goupille de verrouillage (3") de la position verrouillée de la saillie de verrouillage vers la position de libération de la saillie de verrouillage se produit dans une direction vers l'intérieur par rapport à la première partie (3') du fixateur ou dans une direction vers l'extérieur par rapport à la première partie du fixateur.

11. Ensemble rouleau selon l'une quelconque des revendications 5 à 10, dans lequel la première partie (3') du fixateur et l'organe de montage stationnaire (4 ; 13 ; 17 ; 23) comprennent les parties respectives telles que définies dans la revendication 1.

12. Ensemble rouleau selon l'une quelconque des revendications précédentes, dans lequel le tube d'enroulement creux (1) comprend deux canaux de verrouillage positionnés sensiblement diamétralement (10).

13. Ensemble rouleau selon l'une quelconque des revendications précédentes, dans lequel entre le fixateur (3) et le tube d'enroulement creux (1), un ensemble palier (5, 6) est prévu ayant une partie de palier (5) attachée à demeure au tube d'enroulement creux (1) et dans lequel l'au moins un canal de verrouillage (10) est prévu dans ladite partie de palier (5).
